# EUROPEAN PATENT SPECIFICATION

(11) **EP 1 941 431 B1**
(45) Date of publication and mention of the grant of the patent: **12.01.2011**
(21) Application number: 06772817.0
(22) Date of filing: 09.06.2006
(51) Int. Cl.: G06Q 10/00, H04L 12/58, H04L 12/28, H04L 12/56, H04L 29/06

(54) **METHODS, SYSTEMS, AND COMPUTER PROGRAM PRODUCTS FOR SECURED ACCESS TO LIST SERVER INFORMATION VIA SMS MESSAGING**
VERFAHREN, SYSTEME UND COMPUTERPROGRAMMPRODUKTE ZUM SICHERN DES ZUGANGS ZU LISTENSERVERINFORMATIONEN ÜBER SMS-NACHRICHTENÜBERMITTLUNG
PROCEDES, SYSTEMES ET PROGRAMMES INFORMATIQUES D'ACCES SECURISE AUX INFORMATIONS D'UN SERVEUR DE LISTES VIA UN MESSAGE SMS

(30) Priority: 26.10.2005 US 259412
(43) Date of publication of application: 09.07.2008
(73) Proprietor: Sony Ericsson Mobile Communications AB, 221 88 Lund (SE)
(72) Inventor: HYATT, Edward, Craig, Durham, North Carolina 27713 (US)
(74) Representative: Clarke, Alison Clare
(86) International application number: PCT/US2006/022659
(87) International publication number: WO 2007/050140

(56) References cited:
- EP-A- 1 569 395
- WO-A-2004/025977
- GB-A- 2 380 897
- US-A1- 2003 191 806
- "Majordomo Frequently Asked Questions (FAQ)"[Online] 20 October 2001 (2001-10-20), XP002412531 Retrieved from the Internet: URL:http://www.greatcircle.com/majordomo/m ajordomo-faq.html> [retrieved on 2006-12-20]

## Description

### FIELD OF THE INVENTION

The invention relates to communications methods, systems and computer programs for SMS communications.

### BACKGROUND

Short Message Service. (SMS) is a wireless message service that facilitates the transmission of alphanumeric messages between mobile subscribers and external systems such as electronic mail, paging and voice mail systems. SMS has been implemented as a point-to-point service where an SMS message can be transmitted from one mobile terminal to another via a short message service center (SMSC), which can act as a store and forward system for the SMS messages.

It is also known to provide SMS group messaging wherein users can communicate with a number of other members of the group using SMS messages. One SMS group messaging service is marketed by UPOC Networks, which is accessible via the world wide web at: "www.upoc.com".

Another type of group messaging can be provided via e-mail handled by what is sometimes referred to as an e-mail list server. E-mail list servers can allow a user to send a copy of one e-mail to the other members of the list by sending a single e-mail to the list. One e-mail list server is LISTSERV^{®} available from L-soft International, Inc., which is on the Internet at: "www.lsoft.com".

EP1569395 discloses a SMS-to-E-mail service.

"Majordomo Frequently Asked Questions (FAQ)" 20 October 2001, retrieved from the Internet discloses the Majordomo list server.

### SUMMARY

Embodiments according to the invention can provide methods, systems, and computer program products for secured access to list server information via SMS messaging. Pursuant to these embodiments, a method of providing secure communications can be provided by receiving information included in the SMS message at an SMS server, from a wireless terminal pre-authorized subscriber at a list server on a private network administered by an organization including the pre-authorized subscriber, wherein the SMS message is addressed to a list maintained by the list server; forwarding the information to the list server in an email message addressed to the list; determining whether the pre-authorized subscriber is included in the list; determining, based on the information in the SMS message, whether the pre-authorized subscriber is included in the organization; accessing the list at the list server based on the information included in the email to provide a response if the pre-authorized subscriber is a member of the list and is included in the organization; and transmitting the response from the list server responsive to the email.

In some embodiments according to the invention, the pre-authorized subscriber has secondary access to information accessed by the list server other than via the list server. In some embodiments according to the invention, the pre-authorized subscriber is authorized to subscribe to a list maintained by the list server by inclusion in the organization prior to subscriptions. In some embodiments according to the invention, the pre-authorized subscriber comprises an employee, contractor, sub-contractor, or consultant of the organization.

In some embodiments according to the invention, accessing further includes blocking access to the list at the list server if the pre-authorized subscriber is not a member of the list or is not included in the organization. In some embodiments according to the invention, determining whether the pre-authorized subscriber is included in the organization comprises comparing the information included in the SMS message identifying the pre-authorized subscriber with contact information included in the list.

In some embodiments according to the invention, the method further includes transmitting the response to other members of the list as respective SMS messages. In some embodiments according to the invention, the SMS message can be a list query to the list for contact information of another member of the list, wherein transmitting the response comprises transmitting the contact information to the pre-authorized subscriber in a responsive SMS message.

In some embodiments according to the invention, the SMS message includes a list subscription request and the method further includes comparing the information included in the list subscription request identifying the pre-authorized subscriber with contact information. The pre-authorized subscriber is subscribed to the list if the information matches contact information included in the list and the subscription of the pre-authorized subscriber to the list is blocked if the information does not match contact information.

In some embodiments according to the invention, a system for providing secure communications includes a list server, on a private network, administered by an organization configured to receive SMS messages from a wireless terminal preauthorized subscriber that is a member of the organization. In some embodiments according to the invention, the system further includes a database, coupled to the list server, configured to store information associated with pre-authorized subscribers to a list processed by the list server and configured to access the information responsive to the list server to determine, based on the information in the SMS messages, whether the pre-authorized subscriber is included in the organization and a fire wall coupled to the list server, and configured to block unauthorized access to the private network from a public network coupled to the fire wall.

In some embodiments according to the invention, the system further includes an SMS server, on the private network, configured to receive and forward the SMS messages to the list server and configured to receive and forward responses from the list server to the pre-authorized subscribers of the list.

In some embodiments according to the invention, the private network allows the pre-authorized subscriber with secondary access to information accessed by the list server other than via the list server. In some embodiments according to the invention, the pre-authorized subscriber is authorized to subscribe to a list maintained by the list server by inclusion in the organization prior to subscription.

In some embodiments according to the invention, a computer program product for providing secure communications includes a computer readable medium having computer readable program code embodied therein. The computer readable program product includes computer readable program code configured to receive information included in the SMS message, from a wireless terminal pre-authorized subscriber at a list server on a private network administered by an organization including the pre-authorized subscriber, at an SMS server, wherein the SMS message is addressed to a list maintained by the list server; computer readable program code configured to forward the information to the list server in an email message addressed to the list; computer readable program code configured to determine whether the pre-authorized subscriber is a included in the list; computer readable program code configured to determine, based on the information in the SMS message, whether the pre-authorized subscriber is included in the organization; computer readable program code configured to access the list at the list server based on the information included in the email to provide a response if the pre-authorized subscriber is a member of the list and is included in the organization; and computer readable program code configured to transmit the response from the list server responsive to the email.

In some embodiments according to the invention, a method of providing secure communications includes accessing list information responsive to an SMS message from a wireless terminal pre-authorized subscriber maintained by a list server on a private network administered by an organization including the pre-authorized subscriber if a subscriber identity module identifies the pre-authorized subscriber as a member of the organization.

### BRIEF DESCRIPTION OF THE DRAWINGS

Figure 1 is a schematic representation of a system that can provide pre-authorized subscribers access to a list server administered by an organization in which the pre-authorized subscribers are included.
Figure 2 is a block diagram of an exemplary list server in some embodiments according to the invention.
Figure 3 is a flowchart that illustrates processing of a subscription command issued to the list server in some embodiments according to the invention.
Figure 4 is a flowchart that illustrates distribution of a message to members of the list maintained by the list server in some embodiments according to the invention.
Figure 5 is a flowchart that illustrates a contact information query to the list maintained by the list server in some embodiments according to the invention.
Figure 6 is a schematic representation of processing of a subscription command issued to the list server in some embodiments according to the invention.
Figure 7 is a schematic representation of distribution of a message to members of the list maintained by the list server 130 in some embodiments according to the invention.
Figure 8 is a schematic representation of a contact information query to the list maintained by the list server in some embodiments according to the invention.

### DESCRIPTION OF EMBODIMENTS ACCORDING TO THE INVENTION

The invention now will be described more fully hereinafter with reference to the accompanying drawings, in which illustrative embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout. As used herein, the term "and/or" includes any and all combinations of one or more of the associated listed items.

It will be understood that, although the terms first, second, etc. may be used herein to describe various elements, these elements should not be limited by these terms. These terms are only used to distinguish one element from another element. Thus, a first element discussed below could be termed a second element without departing from the scope of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As will be appreciated by one of skill in the art, the invention may be embodied as a method, system, or computer program product. Accordingly, the present invention may take the form of an entirely hardware embodiment, an entirely software embodiment or an embodiment combining software and hardware aspects all generally referred to herein as a "circuit" or "module." Furthermore, the present invention may take the form of a computer program product on a computer-usable storage medium having computer-usable program code embodied in the medium. Any suitable computer readable medium may be utilized including hard disks, CD-ROMs, optical storage devices, a transmission media such as those supporting the Internet or an intranet, or magnetic storage devices.

Computer program code for carrying out operations of the present invention may be written in an object oriented programming language such as Java®, Smalltalk or C++. However, the computer program code for carrying out operations of the present invention may also be written in conventional procedural programming languages, such as the "C" programming language or in a visually oriented programming environment, such as VisualBasic.

Embodiments according to the invention are described in part below with reference to flowchart illustrations and/or block diagrams of methods, systems, computer program products. It will be understood that each block of the illustrations, and combinations of blocks, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the block or blocks.

As used herein, a "wireless terminal" includes devices having receive and transmit hardware capable of two-way communication over a two-way communication link. Such terminals may include cellular or other communications devices with or without a multi-line display; Personal Communications System (PCS) terminals that may combine a voice and data processing, facsimile and/or data communications capabilities; Personal Digital Assistants (PDA) that can include a radio frequency receiver and a pager, Internet/Intranet access, Web browser, organizer, calendar and/or a global positioning system (GPS) receiver; and/or conventional laptop and/or palmtop computers or other appliances, which include a radio frequency receiver. As used herein, "wireless terminals" may be portable, transportable, installed in a vehicle (aeronautical, maritime, or land-based), or situated and/or configured to operate locally and/or in a distributed fashion at any other location(s) on earth and/or in space.

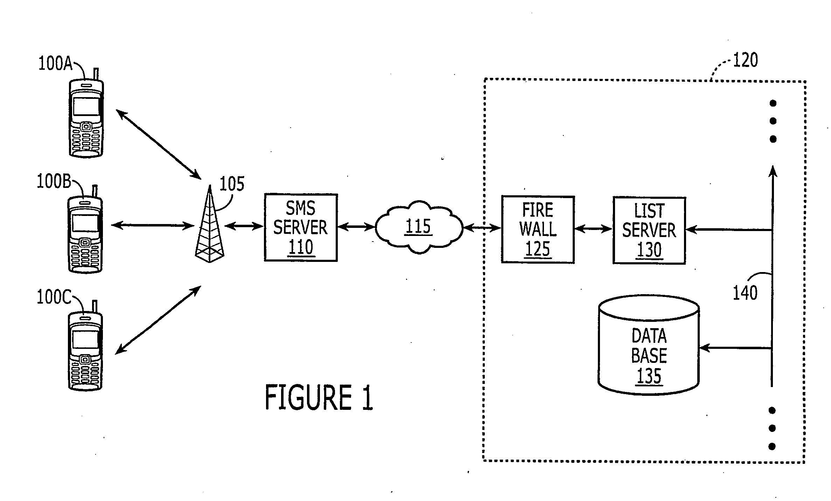

Figure 1 is a schematic representation of a system that can provide pre-authorized subscribers access to a list server administered by an organization in which the pre-authorized subscribers are included. In particular, according to Figure 1, wireless terminals 100A-C are serviced by a wireless communications system of which a base station 105 is a component thereof. It will be understood that although not shown in Figure 1, components other than the base station 105 are also included, such as mobile switching centers, SMS service centers, as well as gateways to other communications systems. In some embodiments according to the invention, the wireless terminal 100A-C are capable of transmitting and receiving SMS formatted messages to/from the wireless communication system in which the base station 105 is included. It will be understood that wireless terminals 100A-C are also capable of communicating other types of information (such as voice and data) with the wireless communications system.

In some embodiments according to the invention, the wireless terminals 100A-C are associated with pre-authorized subscribers of a list server 130 that is administered by an organization that includes the pre-authorized subscribers. As will be understood by those skilled in the art, a list server operates by receiving e-mails directed to a list maintained by the list server and forwards a copy of the e-mail to the e-mail addresses of others included in the list.

The list server 130 is part of a private network 120 that is also administered by the organization that includes the pre-authorized subscribers. Furthermore, the pre-authorized subscribers can access the private network 120, the list server 130 and/or the information maintained by the list server 130 by a secondary network 140 (such as via a corporate network that is also administered by the same organization that included the pre-authorized subscribers). It will be understood that the organization that administers the list server 130 may be a sub-organization that operates under the direction of the organization that controls the private network 120 and/or the secondary network 140.

As further shown in Figure 1, the secondary network 140 can also provide access to a database 135 that operates under the control of the list server 130 to provide operations according to some embodiments of the invention as described herein. It will further be understood that the pre-authorized subscribers that access the list server 130 from outside the private network 120 are "pre-authorized" as a result of their inclusion in the same organization that administers the list server 130. For example, the pre-authorized subscribers can be employees, contractors, subcontractors, and/or consultants of the organization.

In some embodiments according to the invention, the private network 120 can be a corporate local area network that connects to other (public) networks through a fire wall 125 or other system that restricts access to the private network 120 from the other networks. Furthermore, the organization that administers the private network 120 may determine which entities outside the private network 120 can access resources, such as the list server 130, included in the private network 120. For example, the organization that administers the private network 120 may be a corporation that establishes which entities can access the list server 130 through the fire wall 125 or other type of gateway through which access to the private network 120 is channeled.

As used herein, the term "administered" (or similar terms) includes controlling who may access the list server 130 and thereby, the list maintained by the list server 130. Furthermore, "administered" can include control over which revisions of software are installed on the list server 130 to provide the operations described herein, or when maintenance to the list server 130 will be performed. As used herein, the term "organization" includes corporations, or other business groups that maintain security of servers administered by the organization for those who access the servers based on whether users are members of the organization.

The SMS formatted messages transmitted to/from the wireless terminals 100A-C include information that can be used to route the SMS message to a destination, such as the list server 130 in the private network 120. The SMS message can also include information such as commands issued to systems located at the destination of the SMS message. Furthermore, in some embodiments according to the invention, the information included in the SMS message can include data used by the system to which the command is issued as part of the command. For example, the SMS message can include a request for contact information associated with an employee whose name is also included in the information in the SMS message.

The SMS messages are received at an SMS server 110. The SMS server 110 can have access to visitor location registers, home location registers, SMS server centers as well as mobile switching centers, included in the wireless communications system, to determine the intended address of the SMS message. The SMS server 110 can also reformat the SMS message as an e-mail which is forwarded to the determined destination of the SMS message received at the SMS server 110. The e-mail forwarded by the SMS server 110 includes at least some of the information included in the SMS message transmitted by the wireless terminals 100A-C.

In some embodiments according to the invention, the e-mail message is forwarded by the SMS server 110 to the list server 130 via a public network 115 (such as the Internet) through the fire wall 125 that separates the private network 120 from the public network 115. In some embodiments according to the invention, the organization that administers the list server 130 included in the private network 120 is different than an organization that administers systems included in the public network 115 used to transmit messages between the wireless terminals 100A-C and the list server 130. As described above, the private network 120 includes the list server 130 which is administered by the organization to, for example, control access to the private network 120.

The list server 130 receives the e-mail including the information from the SMS message forwarded by the SMS server 110. In some embodiments according to the invention, the list server 130 determines whether the pre-authorized subscriber associated with the wireless terminal that transmitted the SMS message is included in a list that is maintained by the list server 130.

In operation, the list server 130 receives the e-mail message from the pre-authorized subscriber associated with the wireless terminal which transmitted the SMS message and determines whether the pre-authorized subscriber is included in the list contained by the list server 130. In some embodiments according to the invention, the list server 130 also determines whether the pre-authorized subscriber is included in the organization that administers the list server 130. For example, in some embodiments according to the invention, the list server 130 determines whether the pre-authorized user is an employee of an organization that administers the list server, included in the private network 120.

In some embodiments according to the invention, whether the pre-authorized subscriber is included in the organization can be based on the inclusion of the pre-authorized subscriber in a database of those included in the organization. For example, if the pre-authorized subscriber is an employee of the organization, a search of a database that includes all employees of the organization will yield a match between the pre-authorized subscriber and an entry in the database. This match can therefore confirm the pre-authorized subscriber's access to the list maintained by the list server 130. In some embodiments according to the invention, it is determined that the pre-authorized subscriber is both included in the list and is included in the organization.

In some embodiments according to the invention, if the pre-authorized subscriber meets the criteria described above, the list server 130 allows access to the list maintained by the list server 130 so that a response to the e-mail (based on the SMS message) is transmitted from the list server 130. In some embodiments according to the invention, the response includes a confirmation of a subscription request, an e-mail including information directed to members of the list administered by the list server 130 to which the SMS message was addressed, or contact information associated with a member of the list identified by the information included in the SMS message transmitted by the wireless terminal.

If, however, the pre-authorized subscriber is either not included in the list or not included in the organization that administers the list server 130 included in the private network 120, the list server 130 can block the pre-authorized subscriber access to the list administered by the list server 130 thereby promoting the security of information included in the list by only allowing authorized users to access the list server 130.

In still further embodiments according to the invention, the list server 130 does not determine whether the pre-authorized subscriber is a member of the list, but does determine whether the pre-authorized user is a member of the organization that administers the list server 130 included in the private network 120. Accordingly, in some embodiments according to the invention, membership in the list is not a prerequisite of access thereto. However, pre-authorized subscribers who wish to access the list administered by the list server 130 are determined to be included in the organization.

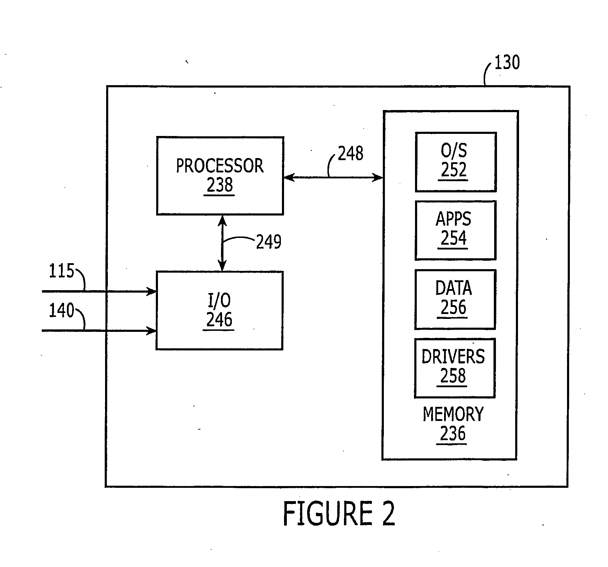

Figure 2 is a block diagram of an exemplary list server 130 in some embodiments according to the invention. As illustrated, the list server 130 includes a processor 238, a memory 236 and input/output circuits 246. The list server 130 may be incorporated in, for example, a general purpose computer, server, router or the like. The processor 238 communicates with the memory 236 via an address/data bus 248 and communicates with the input/output circuits 246 via an address/data bus 249.

The list server 130 can receive e-mail messages from the SMS server 110 over the network 115 via the firewall 125 through the input/output circuits 246 using, for example, an Internet Protocol (IP) connection. The information included in the e-mail message can be used to determine whether the pre-authorized subscriber is a member of the list and/or a member of the organization that administers the private network 120, in which the list server 130 is included. These components may be conventional components such as those used in many conventional data processing systems, which may be configured to operate as described herein.

In particular, the processor 238 can be any commercially available or custom microprocessor, microcontroller, digital signal processor or the like. The memory 236 may include any memory devices containing the software and data used to implement the functionality circuits or modules used in accordance with embodiments of the present invention. The memory 236 can include, but is not limited to, the following types of devices: cache, ROM, PROM, EPROM, EEPROM, flash memory, SRAM, DRAM and magnetic disk.

As further illustrated in Figure 2, the memory 236 may include several categories of software to maintain the list: an operating system 252; application programs 254; input/output device drivers 258; and data 256. As will be appreciated by those of skill in the art, the operating system 252 may be any operating system suitable for use with a data processing system, such as OS/2, AIX or zOS from International Business Machines Corporation, Armonk, NY, Windows 95, Windows98, Windows2000 or WindowsXP from Microsoft Corporation, Redmond, WA, Unix or Linux.

The input/output device drivers 258 typically include software routines accessed through the operating system 252 by the application programs 254 to communicate with devices such as the input/output circuits 246 (used to access the database 135) and certain memory 236 components. The data 256 represents the static and dynamic data used by the application programs 254, the operating system 252, the input/output device drivers 258, and other software programs that may reside in the memory 236.

The operations of the list server 130 described herein may be provided, after being configured to operate in accordance with embodiments of the invention, by any available e-mail list server application. In some embodiments according to the invention, "MAJORDOMO" and LISTSERV applications can be used. The LISTSERV application is described in the LISTSERV User Guide, 1993, ISBN 2-910286-02-9, COPYRGT.1993 by EARN Association. This document is available on the Internet at "ftp://np.msstate.edu/docs/words-l/Net-Stuff/listserv.guide". The MAJORDOMO application is described in a chapter of Managing Internet Information Services, by Jerry Peek, © 1994 by O'Reilly & Associates, Inc., ISBN 1-56592-062-7.

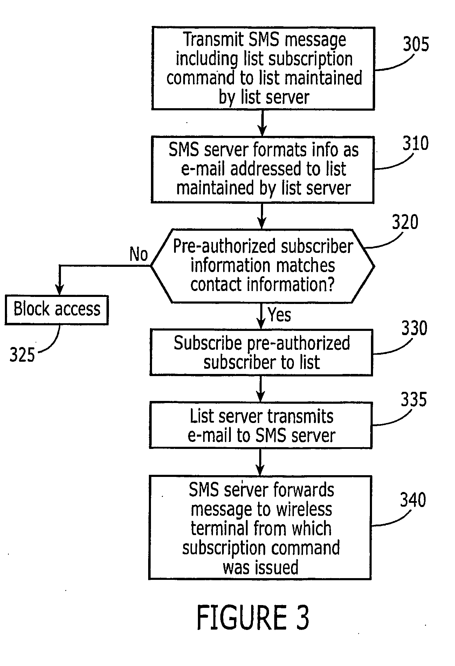

Figure 3 is a flowchart that illustrates processing of a subscription command issued to the list server 130 in some embodiments according to the invention. According to Figure 3, a subscription request is transmitted from a pre-authorized subscriber's wireless terminal in the form of an SMS message directed to the list maintained by the list server 130 (block 305). It will be understood that the subscription command can be issued so that the pre-authorized subscriber will be added to the particular list specified by the subscription command.

It will be understood that the information included in the subscription request can include information that identifies the pre-authorized subscriber's wireless terminal, the pre-authorized subscriber's contact information within the organization that administers the list server 130, information that may be useful in locating the pre-authorized subscriber's wireless terminal (such as the pre-authorized subscriber's wireless service provider ID), and/or information that is stored within the pre-authorized subscriber identity module (SIM).

The SMS server formats the information included in the SMS message as an e-mail that is addressed to the list at the list server 130 (block 310). As shown in Figure 1, the e-mail is transmitted to the list server 130 via the public network 115 through the fire wall 125 that separates the private network 120 from the public network 115.

The list server 130 receives the e-mail from the SMS server and compares the information included in the e-mail that identifies the pre-authorized subscriber with contact information that identifies the pre-authorized subscriber within the organization that administers the list server 130. In some embodiments according to the invention, the contact information that identifies the pre-authorized subscriber within the organization is included with the data that comprises the list maintained by the list server 130 and stored using the database 135. In other embodiments according to the invention, the contact information is maintained by a database that is separate from the list maintained by the list server 130.

If the information included in the e-mail that identifies the pre-authorized subscriber matches an entry in the contact information (block 320), the pre-authorized subscriber is subscribed to the list at the list server 130 (block 330). If, however, the information included in the e-mail that identifies the pre-authorized subscriber does not match an entry in the contact information (block 320), the list server 130 blocks access to the list (block 325). The list server 130 may transmit a response to the subscription command indicating that the request for the subscription to the list has been denied.

Referring again to block 320, the list server 130 can transmit a confirmation e-mail to the pre-authorized subscriber's wireless terminal (block 335) confirming that the subscription command has been received and successfully processed. The e-mail transmitted by the list server 130 including the confirmation is forwarded from the list server 130 to the SMS server 110 which forwards the confirmation message to the wireless terminal 100A-C associated with the pre-authorized subscriber as an SMS message (block 340).

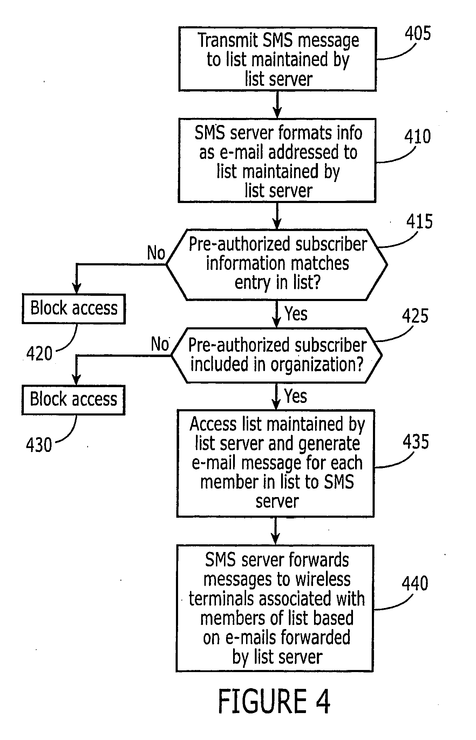

Figure 4 is a flowchart that illustrates distribution of a message to members of the list maintained by the list server 130 in some embodiments according to the invention. According to Figure 4, an SMS message including information related to a message to be forwarded to other members of a list maintained by the list server 130 is transmitted from the wireless terminal 100 A-C associated with a pre-authorized subscriber addressed to the list at the list server 130 (block 405).

In some embodiments according to the invention, the SMS message includes information that can identify the pre-authorized subscriber, the wireless terminal associated with the pre-authorized subscriber (such as information included in the SIM), text associated with the message transmitted, and/or the list to which the message is directed and the list server that maintains the list. The SMS message is received at the SMS server and is forwarded to the list server as an e-mail that includes the information included with the SMS message transmitted by the wireless terminal associated with the pre-autliorized subscriber (block 410). The e-mail is forwarded to the list server 130 and is addressed to the list at the list server 130. It will be understood that the e-mail is forwarded to the list server 130 over the public network 115 through the fire wall 125 that separates the private network 120 from the public network 115.

In some embodiments according to the invention, the list server 130 determines whether the pre-authorized subscriber is subscribed to the list to which the e-mail is addressed (block 415). If the pre-authorized subscriber is not subscribed to the list to which the message is addressed (block 415), access to the list is blocked (block 420), and a confirmation message may be sent to the wireless terminal 100 A-C from which the SMS message was transmitted, to indicate that access was blocked.

If, however, the pre-authorized subscriber is subscribed to the list to which the message is directed (block 415), the list server may determine whether the pre-authorized subscriber is included in the organization that administers the list server 130 included in the private network 120 (block 425). If the pre-authorized subscriber is not included in the organization that administers the list server 130 (block 425), access to the list is blocked by the list server (block 430), and a confirmation message that indicates that access was blocked can be sent to the wireless terminal 100A-C from which the SMS message was transmitted.

If the list server determines that the pre-authorized subscriber is a member of the organization (block 425), access to the list maintained by the list server 130 is allowed (block 435) and the list server 130 forwards a copy of the e-mail message to each of the members included in the list to which the SMS message was directed. In some embodiments according to the invention, no determination is made as to whether the pre-authorized subscriber is included in the list such that access is allowed based only whether the pre-authorized subscriber is included in the organization that administers the list server 130.

The responsive e-mail messages transmitted from the list server 130 are received at the SMS server 110 (block 440) which reformats the information included in the responsive e-mails as responsive SMS messages which are forwarded to the wireless terminals 100A-C associated with each of the members of the list maintained by the list server 130 to which the SMS message was directed.

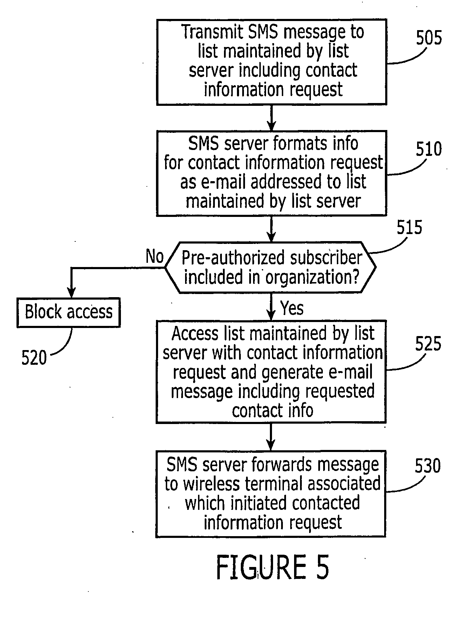

Figure 5 is a flowchart that illustrates a contact information query to the list maintained by the list server 130 in some embodiments according to the invention. According to Figure 5, an SMS message is transmitted from a wireless terminal associated with a pre-authorized subscriber (block 505). The SMS message includes a contact information request addressed to the list server 130 administered by the organization that administers the private network 120. The information included in the contact information request can include information that identifies the pre-authorized subscriber, the pre-authorized subscriber's wireless terminal (such as information from the SIM), and information needed to carry out the contact information request via the list server 130, such as the name of the contact for whom information is requested.

The SMS message is received by the SMS server which forwards the information in the form of an e-mail that includes the information needed to query the list server 130 for contact information specified therein (block 510). The e-mail from the SMS server is forwarded to the list server 130 via the public network 115 through the fire wall 125 which separates the private network 120 from the public network 115.

The list server 130 determines whether the pre-authorized subscriber is included in the organization that administers the list server 130 included in the private network 120 (block 515). If the pre-authorized subscriber is not included in the organization (block 515), access to the list server 130 is blocked (block 520) whereupon a confirmation message may be forwarded to the pre-authorized subscriber indicating that the contact information request to the list server was blocked. If, however, the list server 130 determines that the pre-authorized subscriber is a member of the organization (block 515), the list server 130 is accessed using the contact information request to retrieve contact information associated with the member of the organization included with the contact information request (block 525). The contact information provided by the list server 130 is forwarded to the SMS server in the form of an e-mail that includes the requested contact information. The SMS server forwards the requested contact information to the wireless terminal 100 A-C associated with the pre-authorized subscriber that initiated the contact information request.

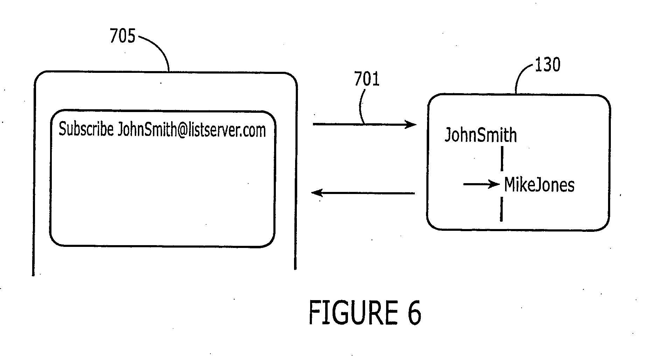

Figure 6 is a schematic representation of processing of a subscription command issued to the list server 130 in some embodiments according to the invention. According to Figure 6, a subscription command such as "Subscribe JohnSmith@listserver.com" is transmitted from a wireless terminal 700 that is associated with a pre-authorized subscriber "Mike Jones." The subscription command is formatted as an SMS message 701 which is transmitted to the list server referred to as "listserver.com" which maintains a list entitled "JohnSmith." Upon receiving the subscription command, the list server 730 determines that "Mike Jones" is a member of the organization that administers the list server 730 and inserts "Mike Jones" into the mailing list entitled "JohnSmith" so that "Mike Jones" is now subscribed to the list "JohnSmith" maintained by the list server 730 so that "Mike Jones" will send/receive SMS messages to/from other per-authorized subscribers included in the list "JohnSmith". The list server 730 may also forward a confirmation message to the wireless terminal 700 confirming that the subscription command has been successfully processed by the list server 730. A confirmation message may appear on the display of the wireless terminal 700 that may be viewed by the pre-authorized subscriber ("Mike Jones").

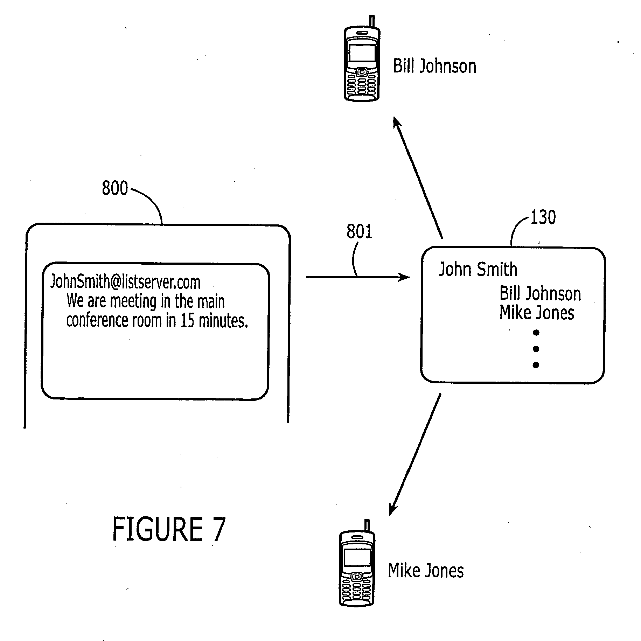

Figure 7 is a schematic representation of distribution of a message to members of a list maintained by the list server 130 in some embodiments according to the invention. According to Figure 7, an SMS message 801 is transmitted from a wireless terminal 800 to a list server 130 that is administered by an organization to which those included in the list belong. In particular, the SMS message 801 can be an SMS message that is intended to be re-distributed to those included in the list maintained by the list server 130.

For example, as shown in Figure 7, an SMS message "JohnSmith@listserver.com We are meeting in the main conference room in fifteen minutes" is transmitted to the list server 130 located at "listserver.com" that maintains the list "JohnSmith" The list server 130 determines that the pre-authorized subscriber is included in the list "JohnSmith" and is a member of the organization which administers the list server 130. The list server 130 then forwards a copy of the message included with the SMS message 801 to those included in the list "JohnSmith" including "Bill Johnson" and "Mike Jones."

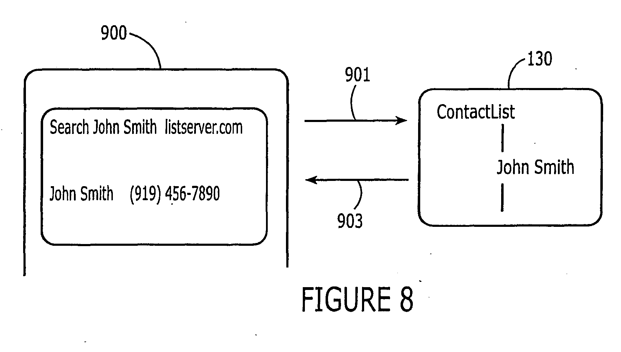

Figure 8 is a schematic representation of a contact information query to the list maintained by the list server 130 in some embodiments according to the invention. According to Figure 8, the query for contact information is transmitted from the wireless terminal 900 as an SMS message 901 to a list server 930. The query "search John Smith contactlist@listserver.com" is transmitted as the SMS message 901 to the list server 930 identified as listsever.com, which administers the list "contactlist." Upon determining that the pre-authorized subscriber associated with wireless terminal 900 is a member of the organization that administers the list server 930, the list server 930 accesses the "contactlist" to retrieve the contact information associated with "John Smith," which is forwarded to the wireless terminal 900 in a responsive SMS message 903. The information included in the responsive SMS message 903 includes the contact information associated with "John Smith" from "contact list" which can be displayed by the wireless terminal 900 for access by the pre-authorized subscriber.

The foregoing is illustrative of the present invention and is not to be construed as limiting thereof. Although exemplary embodiments according to the invention have been described, those skilled in the art will readily appreciate that many modifications are possible without materially departing from the novel teachings and advantages of this invention. Accordingly, all such modifications are intended to be included within the scope of this invention as defined in the claims. Therefore, it is to be understood that the foregoing is illustrative of the present invention and is not to be construed as limited to the specific embodiments disclosed, and that modifications to the disclosed embodiments, as well as other embodiments, are intended to be included within the scope of the appended claims. The invention is defined by the following claims, with equivalents of the claims to be included therein.

## Claims

1. A method of providing secure communications comprising:
receiving information included in the SMS message at an SMS server (110), from a wireless terminal pre-authorized subscriber at a list server (130) on a private network (120) administered by an organization including the pre-authorized subscriber, wherein the SMS message is addressed to a list maintained by the list server (130);
forwarding the information to the list server (130) in an email message addressed to the list;
determining whether the pre-authorized subscriber is included in the list; determining, based on the information in the SMS message, whether the pre-authorized subscriber is included in the organization;
accessing the list at the list server (130) based on the information included in the email to provide a response if the pre-authorized subscriber is a member of the list and is included in the organization; and
transmitting the response from the list server (130) responsive to the email.

2. A method according to claim 1 wherein the pre-authorized subscriber has secondary access to Information accessed by the list server other than via the list server (130).

3. A method according to claim 1 wherein the pre-authorized subscriber is authorized to subscribe to a list maintained by the list server (130) by inclusion in a database associated with the organization prior to subscription.

4. A method according to claim 3 wherein the pre-authorized subscriber comprises an employee, contractor, sub-contractor, or consultant of the organization.

5. A method according to claim 1 wherein the information comprises subscriber identity module receiving information associated with a wireless terminal (100A, 100B, 100C).

6. A method according to claim 1 wherein accessing further comprises:
blocking access to the list at the least server (130) if the pre-authorized subscriber is not a member of the list or is not included in the organization.

7. A method according to claim 1 wherein determining whether the pre-authorized subscriber is included in the organization comprises comparing the information included in the SMS message identifying the pre-authorized subscriber with contact information included In the list.

8. A method according to claim 1 further comprising transmitting the response to other members of the list as respective SMS messages.

9. A method according to claim 1 wherein the SMS message comprises a list query to the list for contact information of another member of the list, wherein transmitting the response comprises transmitting the contact information to the pre-authorized subscriber in a responsive SMS message.

10. A method according to claim 1 wherein the SMS message comprises a list subscription request, the method further comprising:
comparing the information included in the list subscription request identifying the pre-authorized subscriber with contact information;
subscribing the pre-authorized subscriber to the list if the information matches contact information included in the list; and
blocking the subscription to the pre-authorized subscriber to the list if the information does not match contact information.

11. A system for providing secure communications comprising:
a list server (130), on a private network (120), administered by an organization and configured to receive SMS messages from a wireless terminal pre-authorized subscriber that is a member of the organization;
a database (135), coupled to the list server (130), configured to store information associated with pre-authorized subscribers to a list processed by the list server (130) and configured to access the information responsive to the list server (130) to determine, based on the information in the SMS messages, whether the pre-authorized subscriber is included in the organization; and
a fire wall (125), coupled to the list server (130), and configured to block unauthorized access to the private network (120) from a public network (115) coupled to the fire wall (125).

12. A system according to claim 11 further comprising:
a SMS server (110), on the private network (120), configured to receive and forward the SMS messages to the list server (130) and configured to receive and forward responses from the list server (130) to the pre-authorized subscribers of the list.

13. A system according to claim 11 wherein the private network (120) allows the pre-authorized subscriber with secondary access to information accessed by the list server (130) other than via the list server (130).

14. A system according to claim 11 wherein the pre-authorized subscriber is authorized to subscribe to a list maintained by the list server (130) by inclusion in the organization prior to subscription.

15. A computer program product for providing secure communications comprising a computer readable medium having computer readable program code embodied therein, the computer readable program product comprising:
computer readable program code configured to receive information included in the SMS message, from a wireless terminal pre-authorized subscriber at a list server (130) on a private network (120) administered by an organization including the pre-authorized subscriber, at an SMS server (110), wherein the SMS message is addressed to a list maintained by the list server (130);
computer readable program code configured to forward the information to the list server (130) in an email message addressed to the list;
computer readable program code configured to determine whether the pre-authorized subscriber is included in the list;
computer readable program code configured to determine, based on the information in the SMS message, whether the pre-authorized subscriber is included in the organization;
computer readable program code configured to access the list at the list server (130) based on the information included in the email to provide a response if the pre-authorized subscriber is a member of the list and is included in the organization; and
computer readable program code configured to transmit the response from the list server (130) responsive to the email.

16. A computer program product according to claim 15 wherein the pre-authorized subscriber has secondary access to information accessed by the list server (130) other than via the list server (130).

17. A computer program product according to claim 15 wherein the pre-authorized subscriber is authorized to subscribe to a list maintained by the list server (130) by inclusion in the organization prior to subscription.

18. A computer program product according to claim 17 wherein the pre-authorized subscriber comprises an employee, contractor, sub-contractor, or consultant of the organization.

19. A method of providing secure communications comprising:
accessing list information responsive to an SMS message from a wireless terminal pre-authorized subscriber maintained by a list server (130) on a private network (120) administered by an organization including the pre-authorized subscriber if a subscriber identity module identifies the pre-authorized subscriber as a member of the organization.

## Patentansprüche

1. Verfahren zum Bereitstellen sicherer Kommunikationsvorgänge, umfassend:
das Empfangen von Information, die in einer SMS-Nachricht enthalten ist, an einem SMS-Server (110), und zwar von einem drahtlosen Endgerät eines vorermächtigten Teilnehmers an einem Listenserver (130) auf einem privaten Netz (120), das von einer Organisation verwaltet wird, der der vorermächtigte Teilnehmer angehört, wobei die SMS-Nachricht an eine Liste adressiert ist, die in dem Listenserver (130) gehalten wird;
das Weiterleiten der Information an den Listenserver (130) in einer Email-Nachricht, die an die Liste adressiert ist;
das Feststellen ob der vorermächtigte Teilnehmer in der Liste enthalten ist;
gestützt auf die Information in der SMS-Nachricht das Feststellen ob der vorermächtigte Teilnehmer der Organisation angehört;
gestützt auf die in der Email enthaltene Information das Zugreifen auf die Liste an dem Listenserver (130), um eine Antwort zu liefern, falls der vorermächtigte Teilnehmer in die Liste eingetragen ist und falls er der Organisation angehört; und
das Übertragen der Antwort von dem Listenserver (130) als Reaktion auf die Email.

2. Verfahren nach Anspruch 1, wobei der vorermächtigte Teilnehmer einen zweiten Zugang zu Information hat, auf die der Listenserver zugreift, und zwar nicht über den Listenserver (130).

3. Verfahren nach Anspruch 1, wobei der vorermächtigte Teilnehmer ermächtigt ist, sich in eine Liste einzutragen, die in dem Listenserver (130) gehalten wird, und zwar durch Aufnahme in eine der Organisation zugeordnete Datenbank vor dem Eintragevorgang.

4. Verfahren nach Anspruch 3, wobei der vorermächtigte Teilnehmer einen Angestellten, einen Lieferanten, einen Subunternehmer oder einen Berater der Organisation umfasst.

5. Verfahren nach Anspruch 1, wobei die Information Teilnehmerkennzeichnungsmodul-Empfangsinformation enthält, die einem drahtlosen Endgerät (100A, 100B, 100C) zugeordnet ist.

6. Verfahren nach Anspruch 1, wobei das Zugreifen ferner umfasst:
das Sperren des Zugangs zu der Liste in dem Listenserver (130), falls der vorermächtigte Teilnehmer kein Mitglied der Liste ist oder nicht der Organisation angehört.

7. Verfahren nach Anspruch 1, wobei das Feststellen ob der vorermächtigte Teilnehmer der Organisation angehört das Vergleichen der in der SMS-Nachricht enthaltenen Information, die den vorermächtigten Teilnehmer kennzeichnet, mit Kontaktinformation umfasst, die in der Liste enthalten ist.

8. Verfahren nach Anspruch 1, zudem umfassend das Übertragen der Antwort an die anderen Mitglieder der Liste als entsprechende SMS-Nachrichten.

9. Verfahren nach Anspruch 1, wobei die SMS-Nachricht eine Listenabfrage an die Liste nach Kontaktinformation eines anderen Mitglieds der Liste umfasst, und das Übertragen der Antwort das Übertragen der Kontaktinformation an den vorermächtigten Teilnehmer in einer Antwort-SMS-Nachricht umfasst.

10. Verfahren nach Anspruch 1, wobei die SMS-Nachricht eine Listeneintragsanforderung enthält, und das Verfahren zudem umfasst:
das Vergleichen der in der Listeneintragsanforderung enthaltenen Information, die den vorermächtigten Teilnehmer kennzeichnet, mit Kontaktinformation;
das Eintragen des vorermächtigten Teilnehmers in die Liste falls die Information mit der in der Liste enthaltenen Kontaktinformation übereinstimmt; und
das Sperren der Eintragung des vorermächtigten Teilnehmers in die Liste, falls die Information nicht mit der Kontaktinformation übereinstimmt.

11. System zum Bereitstellen sicherer Kommunikationsvorgänge, umfassend:
einen Listenserver (130) in einem privaten Netz (120), der von einer Organisation verwaltet wird und der dafür konfiguriert ist, SMS-Nachrichten von einem drahtlosen Endgerät eines vorermächtigten Teilnehmers zu empfangen, der ein Mitglied der Organisation ist;
eine Datenbank (135), die mit dem Listenserver (130) verbunden und dafür konfiguriert ist, vorermächtigten Teilnehmern zugeordnete Information in einer Liste zu speichern, die von dem Listenserver (130) verarbeitet wird, und die dafür konfiguriert ist, auf die Information abhängig vom Listenserver (130) zuzugreifen, um anhand der Information in den SMS-Nachrichten festzustellen, ob der vorermächtigte Teilnehmer der Organisation angehört; und
eine Firewall (125), die mit dem Listenserver (130) verbunden und dafür konfiguriert ist, einen nicht ermächtigten Zugriff auf das private Netz (120) aus einem öffentlichen Netz (115) zu sperren, das mit der Firewall (125) verbunden ist.

12. System nach Anspruch 11, zudem umfassend:
einen SMS-Server (110) in dem privaten Netz (120), der dafür konfiguriert ist, die SMS-Nachrichten zu empfangen und an den Listenserver (130) weiterzuleiten, und dafür, Antworten von dem Listenserver (130) zu empfangen und an die vorermächtigten Teilnehmer der Liste weiterzuleiten.

13. System nach Anspruch 11, wobei das private Netz (120) dem vorermächtigten Teilnehmer einen zweiten Zugriff auf Information erlaubt, auf die der Listenserver (130) zugreift, und zwar auf einem anderen Weg als über den Listenserver (130).

14. System nach Anspruch 11, wobei der vorermächtigte Teilnehmer ermächtigt ist, sich in eine Liste einzutragen, die in dem Listenserver (130) gehalten wird, wenn er vor dem Eintragen der Organisation angehört.

15. Computerprogrammprodukt, das sichere Kommunikationsvorgänge bereitstellt, umfassend ein computerlesbares Medium, in dem computerlesbarer Programmcode verkörpert ist, wobei das Computerprogrammprodukt umfasst:
einen computerlesbaren Programmcode, der dafür konfiguriert ist, Information zu empfangen, die in der SMS-Nachricht enthalten ist, und zwar von einem drahtlosen Endgerät eines vorermächtigten Teilnehmers an einem Listenserver (130) auf einem privaten Netz (120), das von einer Organisation verwaltet wird, der der vorermächtigte Teilnehmer angehört, an einem SMS-Server (110), wobei die SMS-Nachricht an eine Liste adressiert ist, die in dem Listenserver (130) gehalten wird;
einen computerlesbaren Programmcode, der dafür konfiguriert ist, die Information an den Listenserver (130) weiterzuleiten, und zwar in einer Email-Nachricht, die an die Liste adressiert ist;
einen computerlesbaren Programmcode, der dafür konfiguriert ist, festzustellen ob der vorermächtigte Teilnehmer in der Liste enthalten ist;
einen computerlesbaren Programmcode, der dafür konfiguriert ist, anhand der Information in der SMS-Nachricht festzustellen ob der vorermächtigte Teilnehmer der Organisation angehört;
einen computerlesbaren Programmcode, der dafür konfiguriert ist, auf die Liste in dem Listenserver (130) zuzugreifen, und zwar gestützt auf die in der Email enthaltene Information, um eine Antwort zu liefern, falls der vorermächtigte Teilnehmer in die Liste eingetragen ist und falls er der Organisation angehört; und
einen computerlesbaren Programmcode, der dafür konfiguriert ist, die Antwort von dem Listenserver (130) als Reaktion auf die Email zu übertragen.

16. Computerprogrammprodukt nach Anspruch 15, wobei der vorermächtigte Teilnehmer einen zweiten Zugriff auf Information hat, auf die der Listenserver (130) zugreift, und zwar auf einem anderen Weg als über den Listenserver (130).

17. Computerprogrammprodukt nach Anspruch 15, wobei der vorermächtigte Teilnehmer ermächtigt ist, sich in eine Liste einzutragen, die in dem Listenserver (130) gehalten wird, wenn er vor dem Eintragen der Organisation angehört.

18. Computerprogrammprodukt nach Anspruch 17, wobei der vorermächtigte Teilnehmer einen Angestellten, einen Lieferanten, einen Subunternehmer oder einen Berater der Organisation umfasst.

19. Verfahren zum Bereitstellen sicherer Kommunikationsvorgänge, umfassend:
das Zugreifen auf Listeninformation als Reaktion auf eine SMS-Nachricht von einem drahtlosen Endgerät eines vorermächtigten Teilnehmers, die von einem Listenserver (130) in einem privaten Netz (120) gehalten wird, das von einer Organisation verwaltet wird, der der vorermächtigte Teilnehmer angehört, falls ein Teilnehmerkennzeichnungsmodul den vorermächtigten Teilnehmer als Mitglied der Organisation identifiziert.

## Revendications

1. Procédé de réalisation de communications sécurisées comprenant:
recevoir des informations incluses dans le message SMS à un serveur SMS (110), d'un abonné pré-autorisé de terminal sans fil à un serveur de listes (130) sur un réseau privé (120) administré par une organisation incluant l'abonné pré-autorisé, où le message SMS est adressé à une liste maintenue par le serveur de listes (130);
réacheminer les informations au serveur de listes (130) dans un message email adressé à la liste;
déterminer si l'abonné pré-autorisé est inclus dans la liste;
déterminer, sur la base des informations dans le message SMS, si l'abonné pré-autorisé est inclus dans l'organisation;
accéder à la liste au serveur de listes (130) sur la base des informations incluses dans le email pour fournir une réponse si l'abonné pré-autorisé est un membre de la liste et est inclus dans l'organisation; et
transmettre la réponse du serveur de listes (130) en réponse à l'email.

2. Procédé selon la revendication 1, dans lequel l'abonné pré-autorisé a un accès secondaire aux informations auxquelles accède le serveur de listes autre que par le serveur de listes (130).

3. Procédé selon la revendication 1, dans lequel l'abonné pré-autorisé est autorisé à s'abonner à une liste maintenue par le serveur de listes (130) par l'inclusion dans une base de données associée à l'organisation avant la souscription.

4. Procédé selon la revendication 3, dans lequel l'abonné pré-autorisé comprend un employé, un prestataire, un sous-prestataire ou un consultant de l'organisation.

5. Procédé selon la revendication 1, dans lequel les informations comprennent un module d'identité d'abonné recevant des informations associées à un terminal sans fin (100A, 100B, 100C).

6. Procédé selon la revendication 1, dans lequel l'accès comprend en outre:
bloquer l'accès à la liste au dernier serveur (130) si l'abonné pré-autorisé n'est pas un membre de la liste ou n'est pas inclus dans l'organisation.

7. Procédé selon la revendication 1, dans lequel la détermination si l'abonné pré-autorisé est inclus dans l'organisation comprend la comparaison des informations incluses dans le message SMS identifiant l'abonné pré-autorisé par des informations de contact incluses dans la liste.

8. Procédé selon la revendication 1, comprenant en outre la transmission de la réponse à d'autres membres de la liste comme messages SMS respectifs.

9. Procédé selon la revendication 1, dans lequel le message SMS comprend une requête de liste à la liste pour des informations de contact d'un autre membre de la liste, où la transmission de la réponse comprend la transmission des informations de contact à l'abonné pré-autorisé dans un message SMS de réponse.

10. Procédé selon la revendication 1, dans lequel le message SMS comprend une requête de souscription de liste, le procédé comprenant en outre:
comparer les informations incluses dans la requête de souscription de liste identifiant l'abonné pré-autorisé par des informations de contact;
souscrire l'abonné pré-autorisé à la liste si les informations correspondent aux informations de contact incluses dans la liste; et
bloquer la souscription à l'abonné pré-autorisé à la liste si les informations ne correspondent pas aux informations de contact.

11. Système de réalisation de communications sécurisées comprenant:
un serveur de listes (130), sur un réseau privé (120), administré par une organisation et configuré pour recevoir des messages SMS d'un abonné pré-autorisé de terminal sans fil qui est un membre de l'organisation;
une base de données (135) couplée au serveur de listes (130), configurée pour stocker des informations associées à des abonnés pré-autorisés à une liste traitée par le serveur de listes (130) et configurée pour accéder aux informations en réponse au serveur de listes (130) pour déterminer, sur la base des informations dans les messages SMS, si l'abonné pré-autorisé est inclus dans l'organisation; et
une barrière de sécurité (125), couplée au serveur de listes (130) et configurée pour bloquer un accès non autorisé au réseau privé (120) d'un réseau public (115) couplé à la barrière de sécurité (125).

12. Système selon la revendication 11, comprenant en outre:
un serveur SMS (110), sur le réseau privé (120), configuré pour recevoir et réacheminer les messages SMS au serveur de listes (130) et configuré pour recevoir et réacheminer des réponses du serveur de listes (130) aux abonnés pré-autorisés de la liste.

13. Système selon la revendication 11, dans lequel le réseau privé (120) permet à l'abonné pré-autorisé un accès secondaire à des informations auxquelles accède le serveur de listes (130) autre que par le serveur de listes (130).

14. Système selon la revendication 11, dans lequel l'abonné pré-autorisé est autorisé à s'abonner à une liste maintenue par le serveur de listes (130) par inclusion dans l'organisation avant la souscription.

15. Produit de programme informatique pour la réalisation de communications sécurisées comprenant un support lisible par ordinateur ayant un code programme lisible par ordinateur incorporé dans celui-ci, le produit de programme lisible par ordinateur comprenant:
un code programme lisible par ordinateur configuré pour recevoir des informations incluses dans le message SMS, d'un abonné pré-autorisé de terminal sans fil à un serveur de listes (130) sur un réseau privé (120) administré par une organisation incluant l'abonné pré-autorisé, à un serveur SMS (110), où le message SMS est adressé à une liste maintenue par le serveur de listes (130);
un code programme lisible par ordinateur configuré pour réacheminer les informations au serveur de listes (130) dans un message email adressé à la liste;
un code programme lisible par ordinateur configuré pour déterminer si l'abonné pré-autorisé est inclus dans la liste;
un code programme lisible par ordinateur configuré pour déterminer, sur la base des informations dans le message SMS, si l'abonné pré-autorisé est inclus dans l'organisation;
un code programme lisible par ordinateur configuré pour accéder à la liste au serveur de listes (130) sur la base des informations incluses dans l'email pour fournir une réponse si l'abonné pré-autorisé est un membre de la liste et est inclus dans l'organisation; et
un code programme lisible par ordinateur configuré pour transmettre la réponse du serveur de listes (130) en réponse à l'email.

16. Produit de programme informatique selon la revendication 15, dans lequel l'abonné pré-autorisé a un accès secondaire à des informations auxquelles accède le serveur de listes (130) autre que par le serveur de listes (130).

17. Produit de programme informatique selon la revendication 15, dans lequel l'abonné pré-autorisé est autorisé à s'abonner à une liste conservée par le serveur de listes (130) par inclusion dans l'organisation avant la souscription.

18. Produit de programme informatique selon la revendication 17, dans lequel l'abonné pré-autorisé comprend un employé, un prestataire, un sous-prestataire ou un consultant de l'organisation.

19. Procédé de réalisation de communications sécurisées comprenant:
accéder à des informations de listes en réponse à un message SMS d'un abonné pré-autorisé de terminal sans fil maintenu par un serveur de listes (130) sur un réseau privé (120) administré par une organisation incluant l'abonné pré-autorisé si un module d'identité d'abonné identifie l'abonné pré-autorisé comme un membre de l'organisation.
